Europäisches Patentamt

European Patent Office

Office européen des brevets

(19)

(11)    EP 0 765 259 B1

(12)    **EUROPÄISCHE PATENTSCHRIFT**

(45) Veröffentlichungstag und Bekanntmachung des
Hinweises auf die Patenterteilung:
**16.09.1998  Patentblatt 1998/38**

(21) Anmeldenummer: 95923322.2

(22) Anmeldetag: **13.06.1995**

(51) Int. Cl.$^6$: **B60T 8/00**

(86) Internationale Anmeldenummer:
**PCT/EP95/02290**

(87) Internationale Veröffentlichungsnummer:
**WO 95/35229 (28.12.1995  Gazette 1995/55)**

(54) **SCHALTUNGSANORDNUNG FÜR EINE BREMSANLAGE MIT BASR**

CIRCUITRY FOR BRAKE SYSTEMS WITH BRAKING ANTI-SLIP REGULATION (BASR)

CIRCUITS POUR SYSTEME DE FREINAGE A REGULATION ANTIPATINAGE AU FREINAGE

(84) Benannte Vertragsstaaten:
**DE FR GB**

(30) Priorität: **20.06.1994 DE 4421565**

(43) Veröffentlichungstag der Anmeldung:
**02.04.1997  Patentblatt 1997/14**

(73) Patentinhaber:
**ITT Automotive Europe GmbH
60488 Frankfurt am Main (DE)**

(72) Erfinder:
• **KOLBE, Alexander
D-64846 Gro -Zimmern (DE)**

• **ALBERG, Verena
D-88046 Friedrichshafen (DE)**

(74) Vertreter:
**Blum, Klaus-Dieter, Dipl.-Ing.
c/o ITT Automotive Europe GmbH
Guerickestrasse 7
60486 Frankfurt (DE)**

(56) Entgegenhaltungen:
WO-A-92/08629          DE-A- 3 724 575
DE-A- 4 017 845        DE-A- 4 216 514

# Beschreibung

Die Erfindung bezieht sich auf eine Schaltungsanordnung für eine Bremsanlage mit Antriebsschlupfregelung durch Bremseneingriff (BASR), mit Radsensoren zur Messung des Raddrehverhaltens und mit elektronischen Schaltkreisen zur Auswertung der Sensorsignale und zur Erzeugung von Bremsdruck-Steuersignalen, mit denen beim Überschreiten einer vorgegebenen variablen Antriebsschlupf-Regelschwelle Bremsdruck in die Radbremsen des überdrehenden Rades eingesteuert wird.

Eine Schaltungsanordnung dieser Art ist z.B. aus der DE 40 17 845 A1 bekannt. Der Antriebsschlupf jedes angetriebenen Rades wird individuell geregelt. Die Regelschwelle, bei deren Überschreiten die Antriebsschlupfregelung einsetzt, ist bei dieser bekannten Schaltungsanordnung variabel; sie setzt sich aus einem vorgegebenen Grundwert und aus einem von der Radschlupfbeschleunigung abgeleiteten Anteil zusammen. Zweckmäßigerweise dient als Grundwert ein von der Fahrzeuggeschwindigkeit abhängiger Radschlupfwert; zur Verbesserung des Anfahrverhaltens geht die Grundschwelle von einem relativ hohen Anfangswert aus, der mit der Fahrzeuggeschwindigkeit linear absinkt und ab einer bestimmten Fahrzeuggeschwindigkeit, z.B. von 25 km/h, wieder ansteigt.

Durch dieses Variieren der Regelschwellen, die das Einsetzen der Antriebsschlupfregelung bestimmen, soll die Antriebsschlupfregelung bzw. die Druckeinsteuerung in die Radbremse des überdrehenden Rades - im Vergleich zu bekannten Regelungssystemen mit festen Regelschwellen - noch genauer den unterschiedlichen Straßensituationen angepaßt werden, mit dem Ziel, die Regelgüte zu verbessern.

Aus der Patentschrift DE 37 41 247 C1 ist es auch bereits bekannt, die Schlupfschwellwerte für ein Antriebsschlupfregelsystem an die Bereifung des Kraftfahrzeuges anzupassen.

Der vorliegenden Erfindung liegt ebenfalls die allgemeine Aufgabe zugrunde, das Anfahrverhalten eines Fahrzeugs zu verbessern. Insbesondere sollte auf Fahrbahnen mit niedrigen Reibbeiwerten und auch in Situationen mit geringem Reibbeiwertunterschieden rechts/links die Traktion bzw. das Anfahrverhalten, die Fahrstabilität und - bei Fahrzeugen mit Vorderradantrieb - die Lenkbarkeit verbessert werden.

Es hat sich gezeigt, daß diese Aufgabe durch eine Schaltungsanordnung der eingangs genannten Art gelöst werden kann, deren Besonderheit darin besteht, daß Schaltkreise vorhanden sind, die nach dem Überdrehen eines Rades einer angetriebenen Achse und Einsetzen der Antriebsschlupfregelung den Antriebsschlupf des zweiten, nicht geregelten Rades dieser angetriebenen Achse ermitteln und zur Bildung einer Korrekturgröße auswerten, die die Antriebsschlupf-Regelschwelle des geregelten Rades in Abhängigkeit von dem momentanen Antriebsschlupf des zweiten, nicht geregelten Rades korrigiert.

Die Erfindung beruht also auf der Überlegung, daß zum Verbessern der Traktion und Lenkbarkeit des Fahrzeugs nicht oder nicht nur die Regelung des überdrehenden Rades, das die schlechtere Straßenhaftung besitzt, von Bedeutung ist, sondern daß die Stabilisierung des zweiten, nicht geregelten Antriebsrades, das den höheren Reibbeiwert vorfindet, im Vordergrund stehen muß. Im Gegensatz zu den bekannten BASR-Systemen wird daher die Regelschwelle des geregelten Rades in Abhängigkeit von dem Antriebsschlupf des nicht geregelten Rades, das sich in den meisten Fällen auf der Seite mit höherem Reibbeiwert befindet, variiert. Die Regelschwelle des Antriebsrades auf der Niedrigreibbeiwertseite wird daher an den Reibbeiwert auf der Hochreibwertseite derart angepaßt, daß über diese Niedrigreibwertseite ein möglichst hohes Motormoment auf das Hochreibwertrad übertragen wird. An der Hochreibwertseite, an der keine Regelung stattfindet, stellt sich idealerweise so viel Antriebsschlupf ein, wie benötigt wird, um den Reibbeiwert dieser Seite optimal auszunutzen. Das Rad bleibt im stabilen Gebiet der $\mu$-Schlupf-Kurve. Wechselt der Reibwert, so daß nunmehr auf der anderen Seite der relativ höhere Reibwert liegt, stellt sich das Regelungssystem auf die veränderten Gegebenheiten ein; an der Seite mit dem niedrigeren Reibbeiwert wird Bremsdruck eingesteuert, und zwar in einem solchen Maße, daß die Traktion auf der Hochreibwertseite optimal wird.

Die erfindungsgemäße Regelungsweise ist unabhängig davon, ob die Reibbeiwertunterschiede gering oder hoch sind.

Die vorgegebene Grund-Regelschwelle, die das Einsetzen der Antriebsschlupf-Regelung bestimmt, ist zweckmäßigerweise, ebenso wie bei bekannten Systemen, abhängig von der Fahrzeuggeschwindigkeit und von der Rad- oder der Schlupfbeschleunigung. Die Regelungsschwelle wird durch die Korrekturgröße an den Antriebsschlupf des zweiten, auf dem höheren Reibbeiwert laufenden Rades angepaßt.

Nach einem vorteilhaften Ausführungsbeispiel der Erfindung wird durch die Korrekturgröße die Antriebsschlupf-Regelschwelle des geregelten Rades (über eine Grundschwelle hinaus) erhöht, solange der Antriebsschlupf des nicht geregelten Rades über einer vorgegebenen Antriebsschlupfschwelle liegt, und bis zum Erreichen der Grundschwelle verringert, solange der Antriebsschlupf des nicht geregelten Rades unter der vorgegebenen Schwelle liegt.

Die Korrekturgröße wird zweckmäßigerweise nach der Beziehung

$$f_{Korrektur} = f_1(t) - f_2(t)$$

gebildet, wobei die erste Komponente $f_1(t)$ dieser Korrekturgröße, solange der Antriebsschlupf des nicht geregelten Rades eine vorgegebene Schwelle überschreitet, die Regelschwelle erhöht und wobei die

zweite Komponente $f_2(t)$, solange der Antriebsschlupf des nicht geregelten Rades unter der vorgegebenen Antriebsschlupfschwelle liegt und $f_{Korrektur} > 0$ ist, die Regelschwelle bis zum Erreichen der Grundschwelle erniedrigt.

Die beiden Komponenten $f_1(t)$ und $f_2(t)$ der Korrekturgröße sind vorteilhafterweise linear über der Zeit ansteigende bzw. abnehmende Funktionen.

Schließlich ist es erfindungsgemäß noch vorgesehen, daß die die Erhöhung der ASR-Schwelle des geregelten Rades bestimmende Funktion steileren Gradienten aufweist als die die Abnahme der ASR-Schwelle bestimmende Funktion.

Weitere Details der erfindungsgemäßen Schaltungsanordnung gehen aus der folgenden Beschreibung von Ausführungsbeispielen anhand der beigefügten Abbildungen hervor.

Es zeigen

Fig. 1    in Prinzipdarstellung die wesentlichen hydraulischen und elektrischen Komponenten einer Bremsanlage,bei der die Erfindung zur Anwendung kommt,

Fig. 2    im Diagramm den Verlauf der Fahrzeuggeschwindigkeit, der Geschwindigkeiten beider angetriebenen Räder und der Korrekturgröße während eines Anfahrvorgangs und

Fig. 3    ein Flow-Chart zur Veranschaulichung der Wirkungsweise der Schaltungsanordnung nach der Erfindung.

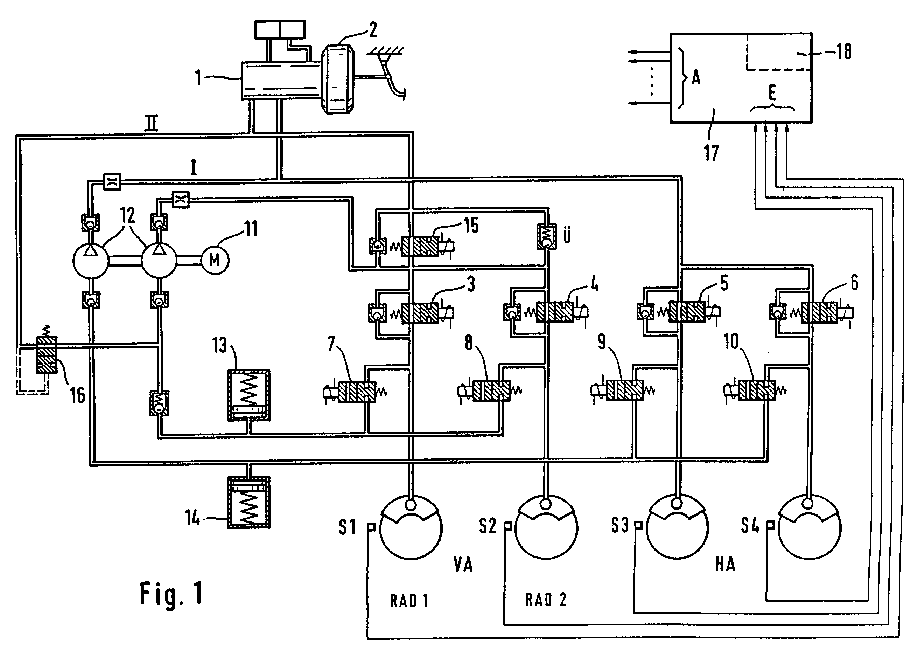

In Fig. 1 ist eine zweikreisige hydraulische Bremsanlage wiedergegeben, die zur Blockierschutzregelung (ABS) und Antriebsschlupfregelung durch Bremseneingriff (BASR) geeignet ist. An einem Bremskreis I sind die nicht angetriebenen Fahrzeugräder, nämlich die Räder der Hinterachse HA, an den anderen Bremskreis II die Räder der Vorderachse VA angeschlossen.

Zu der Bremsanlage nach Fig. 1 gehört ein Tandem-Hauptzylinder 1 mit einem vorgeschalteten Unterdruckverstärker 2. Jedem Fahrzeugrad ist ein in der Ruhestellung auf Durchlaß geschaltetes Einlaßventil 3 bis 6 und ein in der Ruhestellung sperrendes Auslaßventil 7 bis 10 zugeordnet. Zur Rückförderung des über die Auslaßventile 7 bis 10 in der Druckabbauphase eines Regelungsvorgangs abfließenden Druckmittels ist eine zweikreisige Hydraulikpumpe 12 mit einem gemeinsamen Antriebsmotor 11 vorgesehen. Außerdem befindet sich in jedem Bremskreis ein Niederdruckspeicher 13,14, der in bekannter Weise in der Anfangsphase einer Blockierschutzregelung Druckmittel aufnimmt.

Der den Bremskreis II versorgende Zweig der Hydraulikpumpe 12 dient auch zur Bremsdruckerzeugung während eines Antriebsschlupf-Regelungsvorgangs. Ein im Druckmittelweg von dem Hauptzylinder 1 zu den Radbremsen der angetriebenen Räder eingefügtes Trennventil 15 wird zum Bremsdruckaufbau während einer Antriebsschlupf-Regelungsphase, in der der Hauptzylinder 1 drucklos ist, benötigt. Über ein hydraulisch betätigtes 2/2-Wegeventil 16 wird in der Antriebsschlupf-Regelphase Druckmittel aus dem Hauptzylinder 1 zu der Saugseite der Hydraulikpumpe 12 des Hydraulikkreises 2 geleitet.

Ein Überdruckventil Ü begrenzt den im ASR-Betrieb durch die Förderung der Pumpe 12 entstehenden Druck auf einen vorgegebenen Maximalwert.

Nach Fig. 1 besitzt jedes Fahrzeugrad einen Radsensor S1 bis S4, dessen Ausgangssignale den Eingängen E eines elektronischen Reglers 17 zugeführt werden, der die Signale in bekannter Weise auswertet und der über die Ausgänge A Bremsdruck-Steuersignale zur Betätigung der elektrisch betätigbaren Einlaß- und Auslaßventile 3 bis 6; 7 bis 10 und des Trennventils 15 sowie zum Ein- und Ausschalten des Pumpen-Antriebsmotors 11 liefert.

Die erfindungsgemäße Schaltungsanordnung ist Bestandteil des Reglers 17; dies ist durch den gestrichelt abgegrenzten, mit 18 bezifferten Teil des Reglers 17 symbolisch angedeutet.

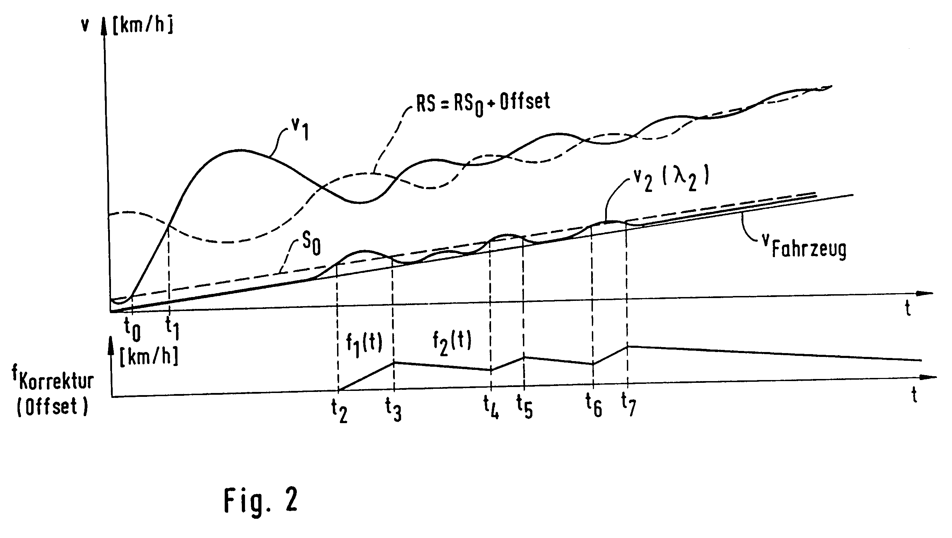

Die Arbeitsweise der erfindungsgemäßen Schaltungsanordnung veranschaulicht Fig. 2. Dargestellt sind in Fig. 2 über der Zeit t die Geschwindigkeit $v_1$ des Antriebsrades RAD1 nach Fig. 1 und die Geschwindigkeit $v_2$ des zweiten Rades RAD2 der Vorderachse VA, die im vorliegenden Fall die angetriebene Achse ist. Außerdem ist in Fig. 2 gestrichelt die Regelschwelle RS dargestellt, ergänzt durch ein "Offset", dessen Verlauf während des hier betrachteten Anfahrvorgangs ebenfalls wiedergegeben ist. Dieses Offset bzw. die Korrekturgröße $f_{korrektur}$ setzt sich aus den beiden Komponenten $f_1(t)$ und $f_2(t)$ zusammen.

Bei dem Anfahrvorgang, auf den sich Fig. 2 bezieht, überschreitet das Rad 1, dessen Radgeschwindigkeit mit $v_1$ bezeichnet ist, zum Zeitpunkt $t_1$ die Regelschwelle RS. Die Antriebsschlupfregelung setzt ein. Durch Einschalten der Hydraulikpumpe 12, Umschalten des Sperrventils 15, Umschalten des Einlaßventils 4, das zu dem "stabilen" Rad 2 führt und Einsteuern von Druck über das Einlaßventil 3 in die Radbremse des angetriebenen Rades RAD1 wird in bekannter Weise der Antriebsschlupf dieses Rades begrenzt. Da in dieser Situation des RAD 1 als erstes in die AS-Regelung gelangt, ist davon auszugehen, daß der Reibbeiwert auf der Seite dieses Rades "niedrig" ist im Vergleich zum Reibbeiwert auf der anderen Fahrzeugseite, nämlich auf der Seite des Rades 2. Bis zum Zeitpunkt $t_2$ bleibt die Regelschwelle RS unbeeinflußt von der erfindungsgemäßen Schaltungsanordnung.

Der Schlupf des zweiten Rades RAD2 der angetriebenen Achse, das sich im betrachteten Augenblick auf der Fahrzeugseite mit dem höheren Reibbeiwert befindet - oder sich zumindest so verhält -, wird mit Hilfe der erfindungsgemäßen Schaltungsanordnung ebenfalls überwacht. Sobald der Schlupf des Rades RAD2 eine vorgegebene, relativ niedrige Schlupfschwelle $S_0$ von beispielsweise 2 km/h überschreitet, wird eine Korrekturgröße $f_{Korrektur}$ nach der Beziehung $k_1t$ ermittelt und ein entsprechendes "Offset" gebildet, mit dem die Regelschwelle RS korrigiert wird. Die Addition der Korrekturgröße $k_1t$ zur Regelschwelle $RS_0$ wird solange fortgesetzt, bis die Geschwindigkeit des zweiten Rades RAD2 zum Zeitpunkt $t_3$ die Schlupfschwelle $S_0$ wieder unterschreitet. Die Regelschwelle RS für das Rad auf der Seite des niedrigeren Reibbeiwertes setzt sich aus der Regelschwelle $RS_0$ und dem "Offset" zusammen.

Zu dem Zeitpunkt $t_3$, an dem die Geschwindigkeit $V_2$ bzw. der Schlupf $\lambda_2$ des Rades, das sich auf der Seite mit höherem Reibbeiwert befindet, die Schlupfschwelle $S_0$ wieder unterschreitet, endet die Zunahme der Regelschwelle RS nach der Funktion $k_1t$. Es beginnt die Verringerung des Offsets nach der Funktion $k_2t$. Bis zum vollständigen Abbau des Offsets oder bis zu einem erneuten Überschreiten der Schlupfschwelle $S_0$ wird nun die Regelschwelle RS nach dieser abnehmenden zeitlichen Funktion $k_2t$ korrigiert. Die Konstante $k_1$ ist größer als $k_2$. Der Gradient der Korrekturgröße $k_2t$ ist daher flacher als der Gradient der anfänglichen Korrekturgröße $k_1t$; die Regelschwelle RS des geregelten Rades (RAD1) wird also mit einer Geschwindigkeit abgesenkt, die kleiner ist als die Geschwindigkeit der Erhöhung dieser Regelschwelle RS. Dadurch wird die Regelfrequenz im Vergleich zu einem System, bei dem das Hochsetzen und Absenken der Korrekturgrößen $k_1t$ bzw. $k_2t$ mit gleicher Neigung geschähe, reduziert. Nach einem erneuten Anstieg des Schlupfes über die Schwelle $S_0$ zum Zeitpunkt $t_4$, gefolgt von einem Unterschreiten der Schwelle zum Zeitpunkt $t_5$, - und entsprechend zu den Zeitpunkten $t_6, t_7$ - wiederholt sich das Hochsetzen und anschließende Wieder-Absenken der Regelschwelle RS.

Das beschriebene, zum Zeitpunkt $t_2$ einsetzende Erhöhen der Regelschwelle RS durch die Korrekturgröße $k_1t$ hat ein Absenken des Bremsdruckes in der Radbremse des geregelten Rades zur Folge. Das überschüssige Motormoment wird somit im Vergleich zu herkömmlichen BASR-Systemen in einem höheren Maße auf dieses Rad (RAD1) mit dem niedrigen Reibbeiwert geleitet. Dies geschieht solange, bis der Antriebsschlupf des zweiten, nicht geregelten Antriebsrades (RAD2) wieder auf den Schwellenwert $S_0$ gesunken ist. Das anschließende Absenken der Regelschwelle RS mit dem Gradienten $k_2t$ führt zu einer erneuten Erhöhung des Bremsdruckniveaus in der Radbremse des geregelten Rdes; dies hat wiederum eine Erhöhung des auf das Hoch-Reibbeiwertrad übertragenen Anteils des Motormoments zur Folge. Es findet also gewissermaßen ein Lernprozeß statt, oder, mit anderen Worten, eine Anpassung der Regelschwelle an den Reibbeiwert, der an der Fahrzeugseite mit der besseren Straßenhaftung herrscht. Durch das Absenken der Regelschwelle RS wird jeweils der zulässige Schlupf auf der Niedrig-Reibbeiwertseite reduziert, was zu einer Erhöhung des Radbremsdruckes führt.

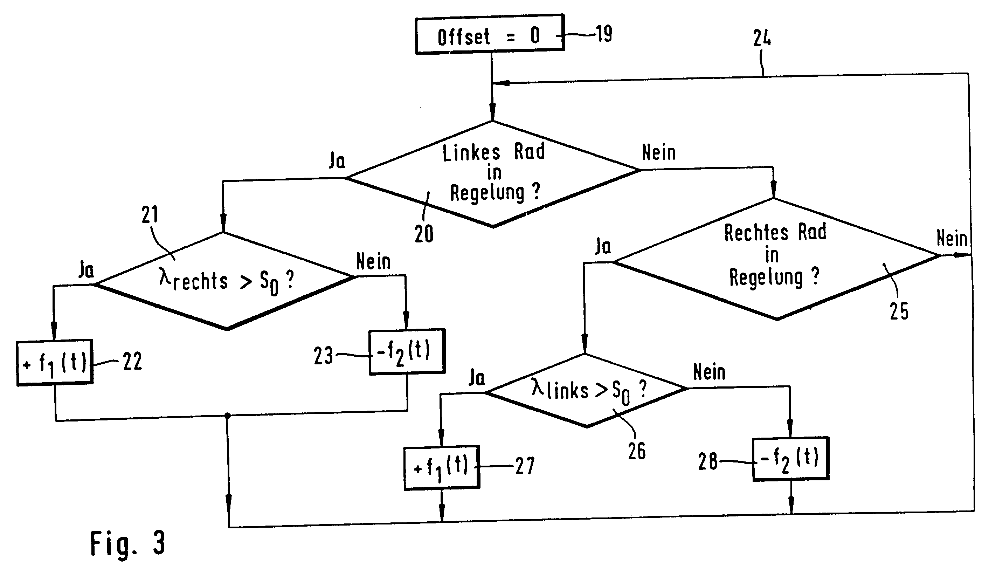

Das Flow-Chart nach Fig. 3 zeigt einen Teil des BASR-Programms, das mit Hilfe der erfindungsgemäßen Schaltungsanordnung ausgeführt wird. Das dargestellte Unterprogramm beginn im Schritt 19 mit der Feststellung, daß die Korrekturgröße bzw. das Offset zu diesem Zeitpunkt des BASR-Programmlaufs Null ist. Im Schritt 20 wird festgestellt, welches Antriebsrad sich momentan in der Regelung befindet. Ist es das linke Rad, wird in der Verzweigung 21 der weitere Programmlauf davon abhängig gemacht, ob der Antriebsschlupf $\lambda_2$ des nicht geregelten (rechten) Antriebsrades die vorgegebene Schlupfschwelle $S_0$ überschritten hat. Liegt der Antriebsschlupf des nicht geregelten Rades über $S_0$ wird nach Schritt 22 die Regelschwelle durch die Korrekturgröße $f_1(t)$ korrigiert. Sinkt der Antriebsschlupf des nicht geregelten Rades unter die Schlupfschwelle So wird, symbolisiert durch Schritt 23, das Offset mit der Korrekturgröße $f_2(t)$ verringert. Wie die Rückführung 24 zeigt, wird dieser Zyklus ständig wiederholt.

Beginnt die Regelung am rechten Rad - oder findet ein Reibbeiwert-Wechsel statt - verläuft in analoger Weise der Entscheidungsprozeß über die Verzweigungen und Programmschritte 25, 26 oder 28.

Nach Fig. 3 kann sich jeweils nur ein Rad in der BAS-Regelung befinden. Die Regelung für dieses Rad ist beendet, sobald das Rad wieder stabil läuft und die Korrekturgröße (Offset) zu Null geworden ist.

Bei einem Reibbeiwert-Wechsel gelangt das Antriebsrad der anderen Fahrzeugseite, die nunmehr die Seite des niedrigeren Reibbeiwertes ist, in die Regelung. In der Radbremse des nicht mehr geregelten Rades wird der Bremsdruck null. Die Regelschwelle auf der Seite des niedrigeren Reibbeiwertes wird wiederum an den höheren Reibbeiwert der Fahrzeugseite, die den besseren Straßenkontakt aufweist, angepaßt. Die Zuordnung "Hoch-Reibbeiwertseite" und "Niedrig-Reibbeiwertseite"kann, wenn die Unterschiede des Reibbeiwertes rechts/links gering sind, häufig wechseln.

Die Erfindung führt im Vergleich zu den bekannten BASR-Systemen zu einer besseren Ausnutzung von geringen Reibbeiwert-Unterschieden und zu einer insgesamt komfortableren Regelung. Im Vergleich zu bekannten Systemen, die einen Druckaufbau bis zum maximalen Systemdruck in den Radbremsen aller geregelten Räder zulassen, wird erfindungsgemäß ein größerer Anteil der überschüssigen Energie bzw. des überschüssigen Motormomentes in kinetische Energie des Niedrig-Reibbeiwert-Rades umgesetzt. Dadurch wird der Anteil des überschüssigen Motormomentes, der in der Radbremse in Wärmeenergie umgesetzt wird, verringert und dadurch die Radbremse entlastet. Dadurch wird wiederum die Verfügbarkeit des Regelungssystems erhöht, weil es länger dauert, bis das System wegen der Erwärmung der Radbremsen abgeschaltet werden muß.

**Patentansprüche**

1. Schaltungsanordnung für eine Bremsanlage mit Antriebsschlupfregelung durch Bremseneingriff (BASR), mit Radsensoren (S1 - S4) zur Messung des Raddrehverhaltens und mit elektronischen Schaltkreisen (17) zur Auswertung der Sensorsignale und zur Erzeugung von Bremsdruck-Steuersignalen, mit denen beim Überschreiten einer vorgegebenen variablen Antriebsschlupf-Regelschwelle Bremsdruck in die Radbremsen des überdrehenden Rades eingesteuert wird, dadurch **gekennzeichnet,** daß Schaltkreise (18) vorhanden sind, die nach dem Überdrehen eines Rades einer angetriebenen Achse und Einsetzen der Antriebsschlupfregelung den Antriebsschlupf ($\lambda_2$) des zweiten, nicht geregelten Rades dieser angetriebenen Achse ermitteln und zur Bildung einer Korrekturgröße ($f_{Korrektur}$) auswerten, die die Antriebsschlupf-Regelschwelle (RS) des geregelten Rades in Abhängigkeit von dem momentanen Antriebsschlupf ($\lambda_2$) des zweiten, nicht geregelten Rades der angetriebenen Achse korrigiert.

2. Schaltungsanordnung nach Anspruch 1, dadurch **gekennzeichnet,** daß durch die Korrekturgröße ($f_{Korrektur}$) die Antriebsschlupf-Regelschwelle des geregelten Rades über eine Grundschwelle ($S_0$) hinaus erhöht wird, solange der Antriebsschlupf des zweiten, nicht geregelten Rades dieser Achse über einer vorgegebenen Antriebsschlupfschwelle ($RS_0$) liegt, und bis zum Erreichen der Grundschwelle (GS) verringert wird, solange der Antriebsschlupf ($\lambda_2$) des nicht geregelten Rades unter der vorgegebenen Antriebsschlupfschwelle ($S_0$) liegt.

3. Schaltungsanordnung nach Anspruch 1 oder 2, dadurch **gekennzeichnet,** daß die Korrekturgröße nach der Beziehung

$$f_{Korrektur1} = f_1(t) - f_2(t)$$

gebildet wird und aus einer ersten Komponenten ($f_1(t)$) besteht, die, solange der Antriebsschlupf des nicht geregelten Rades eine vorgegebene Schwelle ($S_0$) überschreitet, die Regelschwelle (RS) erhöht, und eine zweite Komponente ($f_2(t)$) besitzt, die, solange der Antriebsschlupf ($\lambda_2$) des nicht geregelten Rades unter der vorgegebenen Antriebsschlupfschwelle ($S_0$) liegt, die Regelschwelle (RS) bis zum Erreichen Grundschwelle ($RS_0$) erniedrigt.

4. Schaltungsanordnung nach Anspruch 3, dadurch **gekennzeichnet,** daß die beiden Komponenten

($f_1(t)$,f2(t)) der Korrekturgröße ($f_{Korrektur}$) linear über der Zeit ansteigende bzw. abnehmende Funktionen ($k_1t$)bzw. $k_2t$) sind.

5. Schaltungsanordnung nach Anspruch 4, dadurch **gekennzeichnet,** daß die die Erhöhung der Antriebsschlupfregelungsschwelle (RS) des geregelten Rades bestimmende Funktion ($k_1t$) steileren Gradienten aufweist als die die Abnahme der Antriebsschlupf-Regelschwelle bestimmende Funktion ($k_2t$).

**Claims**

1. Circuit for a brake system with traction slip control by brake management (BASR) which includes wheel sensors (S1-S4) to measure the wheel rotational behavior and electronic circuits (17) to evaluate the sensor signals and to generate braking pressure control signals which are used to introduce braking pressure into the wheel brakes of the spinning wheel when a predetermined variable traction slip control threshold is exceeded, **characterized** in that circuits (18) are provided which, after overspeeding of a wheel of a driven axle and commencement of traction slip control, determine the traction slip ($\lambda_2$) of the second, non-controlled wheel of the driven axle and evaluate this value to produce a correction value ($f_{CORRECTION}$) which corrects the traction slip control threshold (RS) of the controlled wheel as a function of the instantaneous traction slip ($\lambda_2$) of the second, non-controlled wheel of the driven axle.

2. Circuit as claimed in claim 1, **characterized** in that the traction slip control threshold of the controlled wheel is raised beyond a basic threshold ($S_0$) by the correction factor ($f_{CORRECTION}$) as long as the traction slip of the second, non-controlled wheel of this axle is in excess of a predetermined traction slip threshold ($RS_0$), and is reduced until the basic threshold (GS) is reached as long as the traction slip ($\lambda_2$) of the non-controlled wheel is below the predetermined traction slip threshold ($S_0$).

3. Circuit as claimed in claim 1 or claim 2, **characterized** in that the correction factor is produced pursuant the relation

$$f_{CORRECTION} = f_1(t) - f_2(t)$$

and includes a first component ($f_1(t)$ which, as long as the traction slip of the non-controlled wheel exceeds a predetermined threshold ($S_0$), raises the control threshold (RS), and a second component ($f_2(t)$) which, as long as the traction slip ($\lambda_2$) of the non-controlled wheel is below the predetermined

traction slip threshold ($S_0$), lowers the control threshold (RS) until the basic threshold ($RS_0$) is reached.

4. Circuit as claimed in claim 3,
   **characterized** in that the two components ($f_1(t)$, $f_2(t)$) of the correction factor ($f_{CORRECTION}$) are functions ($k_1t$) or ($k_2t$) which respectively rise or decrease linearly as a function of time.

5. Circuit as claimed in claim 4,
   **characterized** in that the function ($k_1t$) which determines the rise of the traction slip control threshold (RS) of the controlled wheel has a steeper gradient than the function ($k_2t$) which determines the decrease of the traction slip control threshold.

**Revendications**

1. Agencement de circuit pour système de freinage à régulation du glissement de traction par intervention des freins (BASR), comprenant des capteurs de roue (S1 - S4), servant a mesurer le comportement de rotation des roues, et des circuits électroniques de commutation (17) servant à analyser les signaux de capteur et à produire des signaux de commande de pression de freinage au moyen desquels, lors du franchissement d'un seuil de régulation de glissement de traction variable préfixé, la pression de freinage est augmentée de manière commandée dans le frein de la roue qui patine, caractérisé en ce qu'il est prévu des circuits de commutation (18) qui, à la suite du patinage d'une roue d'un essieu moteur et de la mise en service de la régulation de glissement de traction, déterminent le glissement de traction ($\lambda_2$) de la seconde roue, non soumise à régulation, de cet essieu moteur et l'utilisent pour former une grandeur de correction ($f_{correction}$) qui corrige le seuil de régulation de glissement de traction (RS) de la roue soumise à régulation, en fonction du glissement de traction momentané ($\lambda_2$) de la seconde roue, non soumise à régulation, de l'essieu moteur.

2. Agencement de circuit suivant la revendication 1, caractérisé en ce qu'au moyen de la grandeur de correction ($f_{correction}$), le seuil de régulation de glissement de traction de la roue soumise à régulation est augmenté au-dessus d'un seuil de base ($S_0$), aussi longtemps que le glissement de traction de la seconde roue de cet essieu, non soumise à régulation, est situé au-dessus d'un seuil de glissement de traction ($RS_0$) préfixé, et est diminué jusqu'à atteindre le seuil de base (GS), aussi longtemps que le glissement de traction ($\lambda_2$) de la roue non soumise à régulation est situé au-dessous du seuil de glissement de traction ($S_0$) préfixé.

3. Agencement de circuit suivant la revendication 1 ou 2, caractérisé en ce que la grandeur de correction est formée conformément à la relation

$$f\,correction = f_1(t) - f_2(t)$$

et est constituée d'une première composante ($f_1(t)$), qui fait augmenter le seuil de régulation (RS) aussi longtemps que le glissement de traction de la roue non soumise à régulation franchit un seuil ($S_0$) préfixé, et possède une seconde composante ($f_2(t)$) qui fait diminuer le seuil de régulation (RS), jusqu'à atteindre un seuil de base ($RS_0$) aussi longtemps que le glissement de traction ($\lambda_2$) de la roue non soumise à régulation est situé au-dessous du seuil de glissement de traction ($S_0$) préfixé.

4. Agencement de circuit suivant la revendication 3, caractérisé en ce que les deux composantes ($f_1(t)$, $f_2(t)$) de la grandeur de correction ($f_{correction}$) sont des fonctions (respectivement $k_1t$ et $k_2t$) respectivement croissante ou décroissante d'une manière linéaire en fonction du temps.

5. Agencement de circuit suivant la revendication 4, caractérisé en ce que la fonction ($k_1t$) déterminant l'augmentation du seuil de régulation de glissement de traction (RS) de la roue soumise à régulation comporte des gradients de plus grande pente que la fonction ($k_2t$) déterminant la diminution du seuil de régulation de glissement de traction.

Fig. 1

Fig. 2

EP 0 765 259 B1

Fig. 3